# FASCICULE DE BREVET EUROPEEN

(11) **EP 3 427 392 B1**
(45) Date de publication et mention de la délivrance du brevet: **04.03.2020**
(21) Numéro de dépôt: 17715211.3
(22) Date de dépôt: 06.03.2017
(51) Int. Cl.: H04B 5/00, B65D 55/06, G06K 19/073, G06K 19/077

(54) **ETIQUETTE ANTI-CONTREFAÇON ROBUSTE À LA FISSURATION**
BRUCHFESTES FÄLSCHUNGSSICHERES ETIKETT
CRACK-RESISTANT COUNTERFEIT-PROOF LABEL

(30) Priorité: 10.03.2016 FR 1652004
(43) Date de publication de la demande: 16.01.2019
(73) Titulaire: WISeKey Semiconductors, 13590 Meyreuil (FR)
(72) Inventeur: BOIRON, Ghislain, 13090 Aix en Provence (FR); GUIDET, Tania, 13710 FUVEAU (FR); GASSEND, Nicolas, 13090 AIX EN PROVENCE (FR)
(74) Mandataire: de Jong, Jean Jacques
(86) Numéro de dépôt international: PCT/FR2017/050493
(87) Numéro de publication internationale: WO 2017/153668

(56) Documents cités:
- WO-A1-2015/177448
- FR-A1- 2 796 208

## Description

### Domaine technique

L'invention est relative aux dispositifs d'identification sans contact à couplage magnétique en champ proche, par exemple de type NFC (de l'anglais « Near Field Communication »), du type ISO 14443, ou du type ISO 15693, et plus spécifiquement à un dispositif sans contact anti-contrefaçon permettant de garantir l'authenticité du contenu d'une bouteille.

### Arrière-plan

La figure 1 illustre une étiquette NFC anti-contrefaçon telle que décrite dans la demande de brevet WO2015177451. L'étiquette est sous la forme d'un ruban 10 en matière isolante servant de substrat pour former des pistes conductrices selon les techniques courantes de fabrication d'étiquettes RFID.

Le centre 10-1 du ruban est agrandi pour loger une antenne NFC 12 formée de plusieurs spires d'une piste conductrice déposée sur une première face du substrat.

La deuxième face du substrat porte une piste conductrice sacrificielle 14 formant deux boucles connectées en série, 14a et 14b, qui traversent respectivement les deux ailes 10-2 et 10-3 formées par les parties de ruban de part et d'autre de la partie centrale.

Un microcircuit de commande 16 est disposé à l'intérieur de l'antenne 12 et est connecté aux bornes de celle ci par une piste sur la même face que l'antenne et par une piste empruntant des vias. L'antenne 12 fournit l'alimentation du microcircuit lorsque celle-ci est placée dans le champ d'un lecteur.

La piste sacrificielle 14 est connectée entre une broche d'alimentation et une broche d'entrée/sortie du microcircuit 16, le cas échéant par des vias, comme cela est représenté. Dans cette configuration, le microcircuit 16 peut être de la famille de circuits VaultIC™, commercialisés par la société Inside Secure, et être programmé pour détecter la discontinuité de la piste sacrificielle 14, comme cela est décrit dans la demande de brevet WO2015177451.

L'étiquette est conçue pour être fixée sur un conteneur, par exemple une bouteille, de sorte que la partie centrale 10-1 soit placée sur un élément de fermeture du conteneur, par exemple un bouchon. Les ailes 10-2 et 10-3 sont alors fixées au goulot de la bouteille. L'extraction du bouchon brise les ailes et la piste sacrificielle 14, déclenchant une détection de discontinuité par le microcircuit 16.

Dans une variante d'étiquette plus simple, la piste sacrificielle 14 peut être connectée en série avec l'antenne 12, de sorte que la rupture de la piste sacrificielle entraîne la suppression de l'alimentation du microcircuit.

On peut diminuer la résistance de rupture de l'étiquette en prévoyant, comme cela est représenté, des amorces de rupture 18 dans les ailes 10-2, 10-3, à proximité de la partie centrale 10-1.

La demande WO 2015/177448 A1 décrit également une étiquette anti-contrefaçon similaire. On a constaté, dans certaines conditions d'assemblage et pour certains types de bouchons ou de goulots de bouteille, que la piste sacrificielle 14 se brisait dès son assemblage, sans que les ailes ne se brisent, rendant l'étiquette inutilisable.

### Résumé

On prévoit de façon générale une étiquette anti-contrefaçon à couplage magnétique en champ proche, comprenant une piste conductrice sacrificielle traversant une zone sacrificielle de l'étiquette. Chaque segment de la piste sacrificielle traversant la zone sacrificielle est scindé longitudinalement en plusieurs sous-segments, les sous-segments étant en contact électrique entre eux aux extrémités du segment.

Les sous-segments d'un même segment peuvent être espacés l'un de l'autre.

Les sous-segments d'un même segment peuvent être rectilignes et parallèles. Alternativement, un sous-segment d'un même segment peut avoir une forme sinueuse. Un autre sous-segment du même segment peut être rectiligne.

L'étiquette peut comprendre une partie centrale et deux ailes sacrificielles rayonnant de la partie centrale, chaque aile comprenant une boucle de la piste conductrice sacrificielle.

### Description sommaire des dessins

Des modes de réalisation seront exposés dans la description suivante, faite à titre non limitatif en relation avec les figures jointes parmi lesquelles :
- la figure 1, précédemment décrite, représente un exemple d'étiquette anti-contrefaçon classique pour bouteilles ; et
- la figure 2 représente un mode de réalisation d'étiquette anti-contrefaçon, dérivée de l'étiquette de la figure 1, rendue robuste à la fissuration.

### Description de modes de réalisation

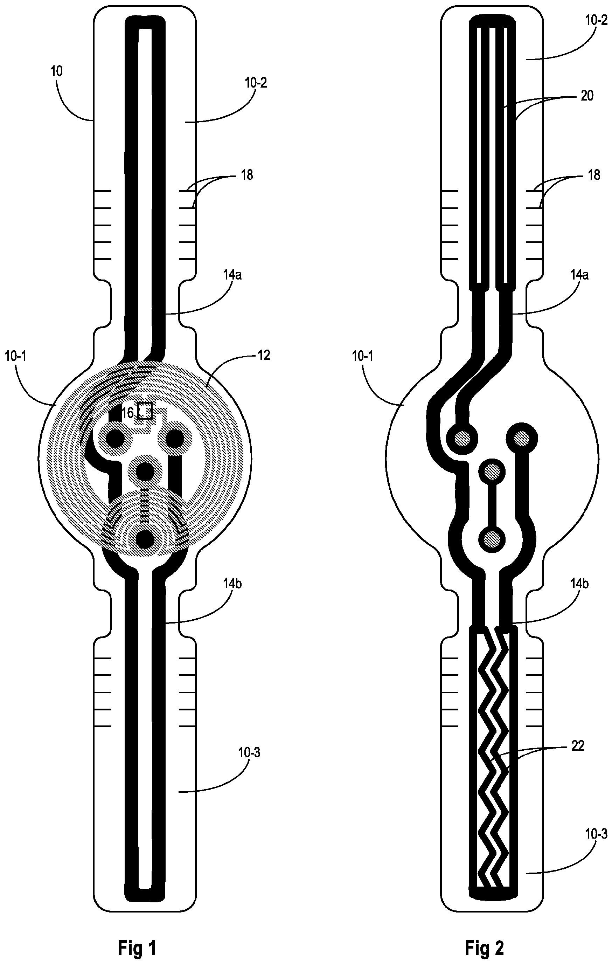

Dans une chaîne de montage classique, des étiquettes du type de la figure 1 peuvent être fixées sur des goulots de bouteille et ensuite être recouvertes par une capsule qui est habituellement prévue pour protéger le bouchon. La capsule est alors conçue pour être perméable aux ondes magnétiques, au moins à sa partie supérieure, à l'endroit où se trouve l'antenne 12. De telles capsules sont typiquement serties à l'aide de galets que l'on fait rouler autour du goulot, en exerçant suffisamment de pression pour conformer la capsule à la forme du goulot.

Dans le cas de bouteilles de vin, le bouchon affleure généralement la partie supérieure du goulot, et les parties en contact avec la capsule sont lisses. Dans ce cas, on ne constate pas de défaillances des étiquettes anti-contrefaçon.

Dans certaines situations, le bouchon comporte une partie dure, par exemple en bois, qui dépasse à la partie supérieure du goulot et affleure les flancs du goulot. Dans ce cas, il subsiste un interstice formant une rainure circonférentielle entre la partie en bois et le goulot. La partie en bois peut en outre être moletée et comporter des rainures circonférentielles, servant à faciliter l'extraction du bouchon. On a constaté de nombreuses défaillances dans cette situation, où la piste sacrificielle se brisait au niveau des rainures circonférentielles, sans doute à cause de la pression trop élevée exercée par les galets.

En analysant les ruptures de la piste sacrificielle, l'inventeur a constaté qu'elles étaient dues à des fissures qui naissaient sur un bord de la piste, et qui avaient le temps de se propager sur toute la largeur de la piste, interrompant la conduction, avant la fin de l'opération de sertissage de la capsule.

Augmenter la largeur des pistes s'est avéré peu efficace, car la propagation d'une fissure s'accélère au cours de sa progression transversalement aux contraintes de traction.

La figure 2 représente un mode de réalisation d'étiquette anti-contrefaçon, dérivée de l'étiquette de la figure 1, rendue robuste à la fissuration. Pour des raisons de clarté, on a omis de représenter la piste formant l'antenne 12.

En fait la figure 2 illustre deux modes de réalisation distincts au niveau des deux ailes 10-2 et 10-3.

De façon générale, chaque segment de la piste sacrificielle 14 qui traverse une zone sacrificielle, ici chacune des ailes 10-2, 10-3, est scindé longitudinalement en deux sous-segments. Les sous-segments sont ainsi mécaniquement indépendants, c'est-à-dire désolidarisés latéralement l'un de l'autre, mais restent connectés électriquement aux extrémités du segment. L'indépendance mécanique assure qu'une fissure qui se propage en travers de l'un des sous-segments s'arrête au bord du sous-segment et n'atteint pas le sous-segment adjacent. Ainsi, si l'un des sous-segments se trouve coupé par une fissure, la conduction électrique continue à être assurée par l'autre sous-segment.

La probabilité de rupture simultanée des deux sous-segments est significativement plus faible que la probabilité de rupture d'un segment unique, même si la somme des largeurs des deux sous-segments ne dépasse pas la largeur de la piste. En effet, il faudrait qu'une fissure soit amorcée simultanément dans les deux sous-segments. En pratique, dans l'exemple d'application étudié, il s'avère que les fissures s'amorcent d'un seul bord de la piste, le bord le plus proche du bord du substrat, où le substrat est soumis à plus de contraintes pour s'adapter à la courbure du goulot.

La piste sacrificielle 14 de l'étiquette de la figure 2 fait une boucle dans chacune des ailes 10-2, 10-3. Elle comprend ainsi deux segments dans chacune des ailes, et chacun de ces segments est scindé en deux sous-segments.

Dans l'aile supérieure 10-2, selon un premier mode de réalisation, les sous-segments 20 sont rectilignes. Ils peuvent en outre être écartés l'un de l'autre, comme cela est représenté, ce qui évite qu'une fissure qui se prolongerait dans le substrat n'atteigne le sous-segment adjacent. A titre d'exemple, l'écart peut avoir la même largeur que les sous-segments, cette largeur étant la moitié de la largeur de la piste 14a. La piste peut avoir typiquement une largeur de 1,5 millimètres et une épaisseur de 30 micromètres.

Dans l'aile inférieure 10-3, selon un deuxième mode de réalisation, l'un des sous-segments peut être rectiligne et l'autre avoir une forme sinueuse, comme cela est représenté pour les sous-segments intérieurs 22. Cette configuration permet de rendre différents les comportements à la fissuration des deux sous-segments, et ainsi diminuer la probabilité pour que les deux sous-segments se fissurent en même temps.

Bien entendu, on peut scinder les segments en plus de deux sous-segments, ce qui augmente la redondance et la robustesse. En pratique, deux sous-segments ont suffi dans les essais conduits par l'inventeur pour offrir un taux de défaillance satisfaisant dans l'application envisagée. Ces essais ont été conduits avec des pistes de 30 micromètres d'épaisseur, des sous-segments rectilignes de 0,7 mm de largeur, écartés de 0,7 mm.

## Revendications

1. Etiquette anti-contrefaçon à couplage magnétique en champ proche, comprenant une piste conductrice sacrificielle (14) traversant une zone sacrificielle (10-2, 10-3) de l'étiquette ;
**caractérisée en ce que** chaque segment de la piste sacrificielle traversant la zone sacrificielle est scindé longitudinalement en plusieurs sous-segments (20), les sous-segments étant en contact électrique entre eux aux extrémités du segment.

2. Etiquette selon la revendication 1, dans lequel les sous-segments d'un même segment sont espacés l'un de l'autre.

3. Etiquette selon la revendication 1, dans lequel les sous-segments d'un même segment sont rectilignes et parallèles.

4. Etiquette selon la revendication 1, dans lequel un sous-segment (22) d'un même segment a une forme sinueuse.

5. Etiquette selon la revendication 4, dans lequel un autre sous-segment du même segment est rectiligne.

6. Etiquette selon la revendication 1, comprenant une partie centrale (10-1) et deux ailes sacrificielles (10,2, 10-3) rayonnant de la partie centrale, chaque aile comprenant une boucle de la piste conductrice sacrificielle.

## Patentansprüche

1. Fälschungssicheres Etikett mit magnetischer Nahfeldkopplung, umfassend eine Opferleiterbahn (14), die durch eine Opferzone (10-2, 10-3) des Etiketts verläuft;
**dadurch gekennzeichnet, dass** jedes die Opferzone durchlaufende Segment der Opferbahn in Längsrichtung in mehrere Untersegmente (20) unterteilt ist, wobei die Untersegmente an den Enden des Segments miteinander in elektrischem Kontakt stehen.

2. Etikett nach Anspruch 1, wobei die Untersegmente desselben Segments voneinander beabstandet sind.

3. Etikett nach Anspruch 1, wobei die Untersegmente desselben Segments geradlinig und parallel sind.

4. Etikett nach Anspruch 1, wobei ein Untersegment (22) desselben Segments eine gewundene Form aufweist.

5. Etikett nach Anspruch 4, wobei ein weiteres Untersegment desselben Segments geradlinig ist.

6. Etikett nach Anspruch 1, umfassend einen zentralen Teil (10-1) und zwei Opferflügel (10,2, 10-3), die von dem zentralen Teil ausgehen, wobei jeder Flügel eine Schleife der Opferleiterbahn umfasst.

## Claims

1. A near-field magnetically coupled anti-counterfeiting tag comprising a sacrificial conductive track (14) crossing a sacrificial zone (10-2, 10-3) of the tag;
**characterized in that** each segment of the sacrificial track crossing the sacrificial zone is split longitudinally into a plurality of sub-segments (20), the sub-segments being in electrical contact with each other at the ends of the segment.

2. The tag of claim 1, wherein the sub-segments of a same segment are spaced apart from each other.

3. The tag of claim 1 wherein the sub-segments of a same segment are rectilinear and parallel.

4. The tag of claim 1, wherein one sub-segment (22) of a same segment has a sinuous shape.

5. The tag of claim 4, wherein another sub-segment of the same segment is rectilinear.

6. A tag according to claim 1, comprising a central portion (10-1) and two sacrificial wings (10,2, 10-3) radially extending from the central portion, each wing including a loop of the sacrificial conductive track.
